# EUROPÄISCHE PATENTSCHRIFT

(11) **EP 0 435 145 B1**
(45) Veröffentlichungstag und Bekanntmachung des Hinweises auf die Patenterteilung: **29.09.1993**
(21) Anmeldenummer: 90124670.2
(22) Anmeldetag: 19.12.1990
(51) Int. Cl.: B60R 22/36, B60R 22/20

(54) **Sicherheitseinrichtung für Fahrzeuge**
Safety device for vehicles
Dispositif de sécurité pour véhicule

(30) Priorität: 23.12.1989 DE 3942778
(43) Veröffentlichungstag der Anmeldung: 03.07.1991
(73) Patentinhaber: AUDI AG, 85045 Ingolstadt (DE)
(72) Erfinder:
(74) Vertreter: Engelhardt, Harald

(56) Entgegenhaltungen:
- US-A- 4 390 143
- US-A- 4 664 415
- US-A- 4 732 409

## Beschreibung

Die Erfindung bezieht sich auf eine Sicherheitseinrichtung für Fahrzeuge mit einem Sicherheitsgurt gemäß dem Oberbegriff des Patentanspruchs 1.

Fahrzeuge mit einem Sicherheitsgurt, einer Aufwickelvorrichtung für den Sicherheitsgurt und einer auf Beschleunigungen reagierenden Blockiereinrichtung für die wickelwelle in der Aufwickelvorrichtung finden Einsatz in fast allen Personenkraftwagen.

In jüngerer Zeit ist man dazu übergegangen, diese Fahrzeuge vermehrt auch mit einem Höhenverstellbeschlag für den oberen umlenkpunkt des Sicherheitsgurtes auszurüsten, um unabhängig von der Körpergröße des Gurtbenutzers einen optimalen Gurtverlauf zu erreichen.

Zur Aufnahme von Babies und Kleinkindern werden im Zubehörhandel Kindersitze angeboten, welche auf dem Beifahrersitz angeordnet werden und dort durch den im Fahrzeug befindlichen Automatik-Sicherheitsgurt gehalten sind. Bei dieser Kombination besteht die Gefahr, daß bei einer Bremsung des Fahrzeuges der Kindersitz nach vorne rutscht oder gar vom vordersitz fällt, wenn die durch die Bremsung eingeleitete Verzögerung unterhalb der Ansprechschwelle der Blockiereinrichtung in der Aufwickelvorrichtung für den Sicherheitsgurt liegt.

Um die Verlagerung des Kindersitzes und die damit auch verbundene Ablenkung des Fahrers zu vermeiden, ist es bekannt, den Automatik-Sicherheitgurt nach dem Befestigen des Kindersitzes durch Klammern, Druckknöpfe oder dergleichen so zu fixieren, daß das Ausziehen von weiterem Gurtband nicht mehr möglich ist. Diese Vorgehensweise ist sehr umständlich und ist der Person, die den Kindersitz befestigt, nur nach eingehendem Studium der Bedienungsanleitung möglich. Die entsprechenden Handgriffe zum Fixieren des Gurtbandes oder das Fixieren überhaupt können leicht in Vergessenheit geraten, insbesondere, wenn ein Kindersitz längere Zeit nach dem Durchlesen der Bedienungsanleitung erstmals montiert wird.

Der Erfindung liegt die Aufgabe zugrunde, eine gattungsgemäße Sicherheitseinrichtung für Fahrzeuge so weiterzubilden, daß bei Festlegung eines Kindersitzes bei einfachster Handhabung das Ausziehen des Sicherheitsgurtes aus der Aufwickelvorrichtung verhindert wird.

Die Aufgabe wird durch die kennzeichnenden Merkmale des Patentanspruchs 1 gelöst.

Dadurch, daß in einer der möglichen Einstellpositionen des Höhenverstellbeschlages das Herausziehen des Sicherheitsgurtes aus der Aufwickelvorrichtung blockiert ist, läßt sich ohne langes Hantieren nach dem Montieren des Kindersitzes der Sicherheitsgurt fixieren. Es ist natürlich auch denkbar, daß nicht nur das Ausziehen, sondern auch das Zurückziehen des Sicherheitsgurtes in der entsprechenden Einstellposition des Höhenverstellbeschlages verhindert ist. Die vorgeschlagene Maßnahme kann an sich bei allen Automatik-Sicherheitsgurten einsetzen, welche zusätzlich mit einem Verstellbeschlag im Bereich des oberen Gurtumlenkpunktes ausgerüstet sind. Höhenverstellbeschläge werden nicht nur für die Vordersitze, sondern teilweise auch für die Rücksitze angeboten. Darüber hinaus gibt es auch Beschläge für die Fondsitze, welche eine Verstellung in Querrichtung erlauben. Auch hierbei läßt sich die Erfindung mit Vorteil einsetzen.

Das Herausziehen des Sicherheitsgurtes aus der Aufwickelvorrichtung kann durch eine separate Einrichtung, beispielsweise durch eine auf das Gurtband einwirkende und durch den Höhenverstellbeschlag gesteuerte Klemmvorrichtung, verhindert werden. Besonders vorteilhaft ist, wenn das Blockieren des Sicherheitsgurtes durch eine auf die Aufwickelwelle der Aufwickelvorrichtung einwirkende Einrichtung erfolgt. Eine solche Einrichtung könnte beispielsweise in einem separaten Haken bestehen, welcher auf eine an der Wickelwelle gelagerte Zahnscheibe einwirkt.

Neben der vorbeschriebenen Lösung mit einer zusätzlichen Einrichtung kann zur Reduzierung des Bauaufwandes vorteilhaft das Blockieren des Sicherheitsgurtes auch durch Aktivierung des auf Beschleunigungen reagierenden Sensors der Blockiereinrichtung geschehen.

Besonders vorteilhaft ist, daß dann, wenn der Höhenverstellbeschlag in die den Sensor blockierende Einstellposition bewegt wird, ein elektrischer Kontakt schließt, wodurch ein Elektromagnet angesteuert wird, welcher den Sensor aktiviert. Solche Sensoren, welche bei Verzögerungen ab einem bestimmten Wert die Wickelwelle in der Aufwickelvorrichtung blockieren, umfassen meist eine Masse, welche bei der Verzögerung aus einer Vertiefung herausgedrängt wird und damit einen Hebel bewegt, welcher auf eine mit der Wickelwelle verbundene Sperrverzahnung eine Rotation verhindernd einwirkt. Der Elektromagnet könnte dazu benutzt werden, die Masse selbst oder einen Übertragungshebel anzuziehen und darüber die Blockierung der Wickelwelle auszulösen.

Gemäß einer vorteilhaften Weiterbildung der Erfindung kann dann, wenn der Höhenverstellbeschlag in die den Sicherheitsgurt blockierende Einstellposition bewegt wird, über mechanische Verbindungsmittel die Bewegung auf den Sensor übertragen werden, wodurch dieser aktiviert wird. Bei dieser Ausgestaltung ist beispielsweise der Übertragungshebel durch ein Seil mit dem Höhenverstellbeschlag gekoppelt. Wird der Höhenverstellbeschlag in die Endstellung bewegt, dann zieht das Seil den Betätigungshebel und blockiert dadurch die Wickelwelle. Um sicherzustellen, daß beim Zurückbewegen des Höhenverstellbeschlages der Betätigungshebel wieder in seine die Wickelwelle freigebende Ausgangslage zurückkehrt, kann diese Bewegung durch eine Feder unterstützt werden.

Besonders vorteilhaft ist, wenn die das Herausziehen des Sicherheitsgurtes aus der Aufwickelvorrichtung blockierende Einstellposition des Höhenverstellbeschlages die oberste Einstellposition ist. Dadurch gibt es keine Probleme, wenn von der blockierten Stellung aus die Blockierung zum Entfernen des Kindersitzes wieder aufgehoben werden soll. Bei der Bewegung des Höhenverstellbeschlages nach unten wird nämlich zusätzliches Gurtband frei (Gurtlose entsteht), so daß keine, ein weiteres Blockieren bewirkende Verspannung erfolgen kann.

Besonders zweckmäßig ist, wenn die das Herausziehen des Sicherheitsgurtes aus der Aufwickelvorrichtung blockierende Einstellposition des Höhenverstellbeschlages durch einen Hinweis auf den Höhenverstellbeschlag kenntlich gemacht ist. Dadurch wird der Benutzer zum einen darauf hingewiesen, in welche Richtung er den Höhenverstellbeschlag zu bewegen hat, um den Sicherheitsgurt zu blockieren. Andererseits dient der Hinweis dazu, den Fahrzeuginsassen stets auf die Möglichkeit hinzuweisen, daß in diesem Fahrzeug eine Vorrichtung zur Blockierung des Sicherheitsgurtes bei Verwendung von Kindersitzen vorhanden ist.

Alternativ oder am besten zusätzlich kann in einer weiteren Ausgestaltung der Erfindung der blockierte Sicherheitsgurt durch eine Anzeige im Bereich des Armaturenbrettes signalisiert werden.

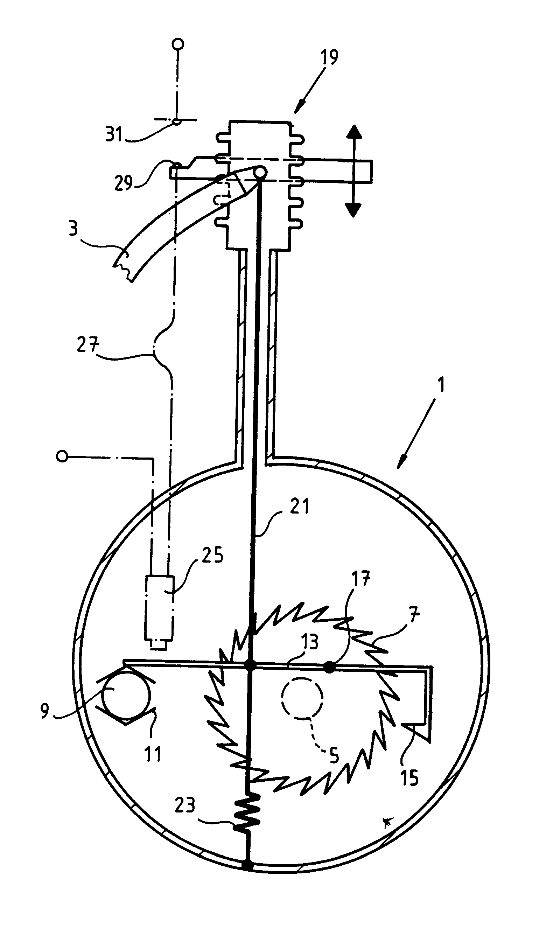

Zwei Ausführungsbeispiele der Erfindung sind in der Zeichnung dargestellt und werden nachfolgend näher beschrieben. Die Figur zeigt schematisch eine Aufwickelvorrichtung 1 für einen nur abschnittsweise dargestellten Sicherheitsgurt 3.

Die Aufwickelvorrichtung 1 umfaßt in an sich bekannter Weise eine Wickelwelle 5, mit der eine Scheibe mit einer Sperrverzahnung 7 fest verbunden ist. Außerdem ist die Aufwickelvorrichtung 1 mit einer auf Beschleunigungen reagierenden Blockiereinrichtung versehen. Diese Blockiereinrichtung besteht aus einer Masse 9, aufgenommen in einer kalottenartigen Vertiefung 11. Die Masse 9 steht über einen Betätigungshebel 13 mit einem Sperrzahn 15 in Verbindung.

Wird die Masse 9 aufgrund einer entsprechend großen negativen Beschleunigung aus der Vertiefung 11 herausbewegt, dann schwenkt der Betätigungshebel 13 um seinen Drehpunkt 17, wodurch der Sperrzahn 15 in Eingriff mit der Sperrverzahnung 7 gelangt. Die Wickelwelle 5 und darüber der Auszug des Sicherheitsgurtes 3 wird dadurch verhindert.

Das Eingreifen des Sperrzahnes 15 in die Sperrverzahnung 7 läßt sich willkürlich auch dadurch bewirken, wenn ein Höhenverstellbeschlag 19 für den Sicherheitsgurt 3 nach oben in die Endposition bewegt wird. Die Bewegung des Höhenverstellbeschlages 19 wird nämlich durch ein Seil 21 auf den mit dem Sperrzahn 15 versehenen Betätigungshebel 13 übertragen. In der obersten Position des Höhenverstellbeschlages 19 ist demnach ebenfalls das Ausziehen des Sicherheitsgurtes 3 unterbunden. Dadurch ist sichergestellt, daß ein mit dem Sicherheitsgurt 3 befestigter Kindersitz sich nicht verlagern kann, wenn das Fahrzeug verzögert wird, die Verzögerung jedoch nicht so groß ist, daß die Blockiervorrichtung anspricht.

Soll die Blockierung des Sicherheitsgurtes 3 zum Entfernen des Kindersitzes wieder gelöst werden, dann muß nur der Höhenverstellbeschlag 19 aus seiner Endposition nach unten bewegt werden. Dabei zieht eine auf das Seil 21 einwirkende Feder 23 den Betätigungshebel 13 nach unten und darüber den Sperrzahn 15 aus der Sperrverzahnung 7. Die Vorrichtung ist so bemessen, daß die Sperre gelöst wird, wenn der Höhenverstellbeschlag 19 mindestens eine Raste nach unten verschoben wird.

Eine Alternative zur vorbeschriebenen Lösung ist strichpunktiert eingezeichnet. Sie umfaßt einen Elektromagneten 25, welcher über ein Kabel 27 mit einem ersten elektrischen Kontakt 29 verbunden ist. Der erste Kontakt 29 trifft auf einen zweiten Kontakt 31 und versorgt damit den Elektromagneten 25 mit Strom, wenn der Höhenverstellbeschlag 19 in die oberste Position bewegt wird.

Der aktivierte Elektromagnet 25 zieht den Betätigungshebel 13 an, wodurch auch hier wiederum der Sperrzahn 15 in die Sperrverzahnung 7 eingreift und die Wickelwelle 5 blockiert. Beim Verschieben des Höhenverstellbeschlages 19 nach unten wird die Stromversorgung zum Elektromagneten 25 unterbrochen und der Betätigungshebel 13 kehrt in seine die Blockierung aufhebende Ausgangslage zurück.

## Patentansprüche

1. Sicherheitseinrichtung für Fahrzeuge, mit einem Sicherheitsgurt (3), einer Aufwickelvorrichtung (1) für den Sicherheitsgurt (3), einer auf Beschleunigungen reagierenden Blockiereinrichtung für die Wickelwelle (5) in der Aufwickelvorrichtung (1) sowie einem Höhenverstellbeschlag (19) für den oberen Umlenkpunkt des Sicherheitsgurtes (3), dadurch gekennzeichnet, daß in einer der möglichen Einstellpositionen des Höhenverstellbeschlages (19) das Herausziehen des Sicherheitsgurtes (3) aus der Aufwickelvorrichtung (1) durch Blockieren derselben verhindert wird, wobei eine mechanische oder elektrische Verbindung zwischen dem Höhenverstellbeschlag (19) und der Aufwickelvorrichtung (1) diese Blockierung auslöst.

2. Sicherheitseinrichtung nach Anspruch 1, dadurch gekennzeichnet, daß die Blockiervorrichtung für die Wickelwelle (5) einen Sensor (9, 11) umfaßt und über die Verbindung zwischen dem Höhenverstellbeschlag (19) und der Aufwickelvorrichtung (1) der Sensor (9, 11) aktiviert wird.

3. Sicherheitseinrichtung nach Anspruch 1 oder 2, wobei die Blockiereinrichtung für die Wickelwelle (5) einen um einen Drehpunkt (17) schwenkbaren Betätigungshebel (13) mit einem Sperrzahn (15) zum Eingriff in eine mit der Wickelwelle (5) verbundenen Sperrverzahnung (7) umfaßt, dadurch gekennzeichnet, daß der Betätigungshebel (13) über ein Seil (21) mit dem Höhenverstellbeschlag (19) verbunden ist.

4. Sicherheitseinrichtung nach Anspruch 1 oder 2, wobei die Blockiereinrichtung für die Wickelwelle (5) einen um einen Drehpunkt (17) schwenkbaren Betätigungshebel (13) mit einem Sperrzahn (15) zum Eingriff in eine mit der Wickelwelle (5) verbundenen Sperrverzahnung (7) umfaßt, dadurch gekennzeichnet, daß der Betätigungshebel (13) durch einen Elektromagneten (25) in seine Sperrposition bewegt wird, wenn elektrische Kontakte (29, 31) im Höhenverstellbeschlag (19) geschlossen werden.

5. Sicherheitseinrichtung nach einem der Ansprüche 1 bis 4, dadurch gekennzeichnet, daß die das Herausziehen des Sicherheitsgurtes (3) aus der Aufwickelvorrichtung (1) blockierende Einstellposition des Höhenverstellbeschlages (19) die oberste Einstellposition ist.

6. Sicherheitseinrichtung nach einem der Ansprüche 1 bis 5, dadurch gekennzeichnet, daß die das Herausziehen des Sicherheitsgurtes (3) aus der Aufwickelvorrichtung (1) blockierende Einstellposition des Höhenverstellbeschlages (19) durch einen Hinweis auf dem Höhenverstellbeschlag (19) kenntlich gemacht ist.

7. Sicherheitseinrichtung nach einem der Ansprüche 1 bis 6, dadurch gekennzeichnet, daß der blockierte Sicherheitsgurt (3) durch eine Anzeige im Bereich des Armaturenbrettes angezeigt wird.

## Claims

1. Safety device for vehicles, comprising a seat belt (3), a take-up unit (1) for the seat belt (3), a locking device reacting to accelerations for locking the winding shaft (5) in the take-up unit (1), and a height adjuster fitting (19) for the upper reversing point of the seat belt characterised in that in one of the possible adjustment settings of the height adjuster fitting (19) the seat belt (3) is prevented from being pulled out of the take-up unit (1) by locking of the latter, a mechanical or electrical connection between the height adjuster fitting (19) and the take-up unit (1) triggering said locking action.

2. Safety device according to claim 1, characterised in that the locking unit for the winding shaft (5) includes a sensor (9, 11) and the sensor (9, 11) is activated via the connection between the height adjuster fitting (19) and the take-up unit (1).

3. Safety device according to claim 1 or 2, wherein the locking device for the winding shaft (5) includes a control lever (13) which can be swivelled about a fulcrum (17) and has a ratchet wheel ratchet (15) for engagement in a ratchet tooth system (7) connected to the winding shaft (5), characterised in that the control lever (13) is connected via a cable (21) to the height adjuster fitting (19).

4. Safety device according to claim 1 or 2, wherein the locking device for the winding shaft (5) includes a control lever (13) which can be swivelled about a fulcrum (17) and has a ratchet wheel ratchet (15) for engagement in a ratchet tooth system (7) connected to the winding shaft (5), characterised in that an electromagnet (25) moves the control lever (13) into its locking position when electrical contacts (29, 31) in the height adjuster fitting (19) are closed.

5. Safety device according to any of claims 1 to 4, characterised in that the adjustment setting of the height adjuster fitting (19) that locks the seat belt (3) against being pulled out of the take-up unit (1) is the uppermost adjustment setting.

6. Safety device according to any of claims 1 to 5, characterised in that the adjustment setting of the height adjuster fitting (19) that locks the seat belt (3) against being pulled out of the take-up unit (1) is marked by an indication on the height adjuster fitting (19).

7. Safety device according to any of claims 1 to 6, characterised in that the fact that the seat belt (3) is locked is indicated by a display in the region of the instrument panel.

## Revendications

1. Dispositif de sécurité pour véhicules automobiles, comprenant une ceinture de sécurité (3), un dispositif enrouleur (1) pour la ceinture de sécurité (3), un dispositif de blocage qui réagit aux accélérations pour l'arbre d'enroulement (5) contenu dans le dispositif enrouleur (1), ainsi qu'une ferrure (19) de réglage en hauteur pour le point de renvoi supérieur de la ceinture de sécurité (3), caractérisé en ce que, dans l'une des positions de réglage possibles de la ferrure (19) de réglage en hauteur, l'extraction de la ceinture de sécurité (3) hors du dispositif enrouleur (1) est empêchée par blocage de celui-ci, une liaison mécanique ou électrique entre la ferrure (19) de réglage en hauteur et le dispositif enrouleur provoquant ce blocage.

2. Dispositif de sécurité selon la revendication 1, caractérisé en ce que le dispositif de blocage pour l'arbre d'enroulement (5) comprend un détecteur (9, 11), lequel détecteur (9, 11) est actionné au moyen de la liaison entre la ferrure (19) de réglage en hauteur et le dispositif enrouleur (1).

3. Dispositif de sécurité selon la revendication 1 ou 2, dans lequel le dispositif de blocage pour l'arbre d'enroulement (5) comprend un levier d'actionnement (13) pivotant autour d'un point de rotation (17) et muni d'un cliquet (15) qui peut s'engager dans une denture d'arrêt (7) solidaire de l'arbre d'enroulement (5), caractérisé en ce que le levier d'actionnement (13) est relié par un câble (21) à la ferrure (19) de réglage en hauteur.

4. Dispositif de sécurité selon la revendication 1 ou 2, dans lequel le dispositif de blocage pour l'arbre d'enroulement (5) comprend un levier d'actionnement (13) pivotant autour d'un point de rotation (17) et muni d'un cliquet (15) qui peut s'engager dans une denture d'arrêt (7) solidaire de l'arbre d'enroulement (5), caractérisé en ce que le levier d'actionnement (13) est placé dans sa position d'arrêt par un électro-aimant (25) lorsque des contacts électriques (29, 31) dans la ferrure (19) de réglage en hauteur sont fermés.

5. Dispositif de sécurité selon l'une quelconque des revendications 1 à 4, caractérisé en ce que la position de réglage de la ferrure (19) de réglage en hauteur qui bloque l'extraction de la ceinture de sécurité (3) hors du dispositif enrouleur (1) est la position de réglage la plus haute.

6. Dispositif de sécurité selon l'une quelconque des revendications 1 à 5, caractérisé en ce que la position de réglage de la ferrure (19) de réglage en hauteur qui bloque l'extraction de la ceinture de sécurité (3) hors du dispositif enrouleur (1) est signalée par une indication sur la ferrure (19) de réglage en hauteur.

7. Dispositif de sécurité selon l'une quelconque des revendications 1 à 6, caractérisé en ce que l'état bloqué de la ceinture de sécurité (3) est signalé par une indication au niveau du tableau de bord.
